# EUROPEAN PATENT APPLICATION

(11) **EP 0 536 831 A1**
(43) Date of publication of application: **14.04.1993**
(21) Application number: 92202981.4
(22) Date of filing: 29.09.1992
(51) Int. Cl.: G08B 5/22

(54) **Digital communications system and a receiving apparatus for use in the system**

(30) Priority: 09.10.1991 GB 9121424
(71) Applicant: PHILIPS ELECTRONICS UK LIMITED, Croydon CR9 3QR (GB); Philips Electronics N.V., 5621 BA Eindhoven (NL)
(72) Inventor: Sharpe, Anthony Keith, c/o Philips Telecom, St.Andrews Road, Cambridge CB4 1DP (GB); McPherson, Andrew David, c/o Philips Telecom, St.Andrews Road, Cambridge CB4 1DP (GB)
(74) Representative: Moody, Colin James

(57) **Abstract**

In digital communication systems such as digital paging, alpha-numeric messages are encoded character-by-character using say the ISO-7 bit character set. The number of bits concerned in sending such messages can be reduced by arranging the primary and secondary stations in a communications system to have ROMs which store a common vocabulary. If a word to be sent is stored in the ROM then its location address is transmitted. However if a word is not present in the ROM then it is encoded character-by-character. Switch characters are used to indicate the change between the transmission of location addresses and encoded characters, and vice versa.

If the capacity of the ROM permits numerals encoded using say hexadecimal 4-bit characters and common vocabularies in at least two languages can be stored. In such cases, the switch character can be used in a more versatile manner to indicate a change not only in the mode of encoding but also a change from one language to another.

## Description

The present invention relates to a digital communications system and to a receiving apparatus for use in the system. More particularly the present invention relates to the transmission of alpha-numeric messages in digital communication systems such as digital radiopaging system.

For convenience of description the present invention will be described with reference to a digital radiopaging system but it is to be understood that the present invention is applicable to other digital transmission systems.

An internationally used digital paging code is the CCIR Radiopaging Code No. 1 which is also known as POCSAG (Post Office Code Standardisation Advisory Group). Details of this radiopaging code are given in a book entitled "The book of the CCIR Radiopaging Code No. 1" published by the Radiopaging Code Standards Group (RCSG) in 1986. Appendix 1 discloses the Specification for a standard Code Format for use in Wide Area Radiopaging Systems the details of which will be known by those skilled in the art. However for the sake of completeness the signal format used comprises a batch structure consisting of preamble and a succession of concatenated batches. Each batch consists of a synchronisation codeword plus 8 frames each comprising 2 codewords, making a total of 17 codewords. There are two types of codewords, address codewords and message codewords each comprising 32 bits. In the case of a message codeword 20 bits, that is bit 2 to bit 21 inclusive, form a data field and these are followed by parity check bits. Bits 20 and 21 of an address codeword, which precedes the message codeword(s), are function bits and are used to select the format of decoding of concatenated message codewords. Appendix 1, subsection 4.1 states that for the sole transmission of messages in decimal numbers, 4 bits per character are used and the function bits are set to 00. Subsection 4.2 refers to an Alpha-numeric or General Data Format and states that the ISO 7-bit coded character set is used and that the function bits are set to 11. When sending a message, the batch structure is maintained. Thus a message comprises an address codeword and concatenated message codewords plus a synchronisation codeword at the beginning of each batch. As Appendix 1 is quite specific in stating that the formats shall not be mixed within any one message then the function bits in the address codeword effectively condition the paging receiver to the method of deformatting the received message. Whilst both formats have been used successfully in the transmission of messages, there is a desire to increase the message throughput in a communications system, such as a digital radiopaging system.

An object of the present invention is to improve the alpha-numeric message throughput in a digital communications system.

According to the present invention there is provided a digital communications system comprising a transmitting means and a receiving means, in which the transmitting means has means for transmitting alpha-numeric message data in a single message in at least two encoded modes and in which the change from one encoded mode to another encoded mode is denoted by the presence of a switch character.

By the digital communications system in accordance with the present invention being able to send messages with data in at least two encoded modes then the encoding of the messages can be optimised. For example a widely used common vocabulary can be stored in a ROM provided respectively at a transmitter and a receiver and when encoding a word all that is required is to transmit an address of a location in the ROM using say 12 or 14 bits rather than the encoded individual alpha characters. However for words, such as names, which are not included in the common vocabulary, these have to be encoded character by character using for example the ISO-7 bit coded character set. Changes from one encoded mode to another encoded mode are indicated by switch characters which at a receiving apparatus are used by a controller to feed stored message data either to a ROM containing the common vocabulary or direct to a display driver which is capable of interpreting the particular coded character set being used. A word is read-out of the ROM character by character in the coded character set being used by the display driver, which coded characters are supplied to the display driver. The use of one or more switch characters enables word compression to be achieved using a limited capacity ROM without any restriction on the word content of a message to be sent.

As a result of compressing widely used words in the manner described in the preceding paragraph a data message can be encoded in a significantly fewer number of bits compared to using only the ISO-7 bit coded character set. However since the widely used words when stored may include a space character and the ROM address codewords can be concatenated by inferring a space character at the end of each word, whereas space characters have to be sent using the ISO-7 bit coded character set, then even for short words of one letter there can be a saving in the number of bits to be transmitted. The overall benefit in reducing the number of bits to be transmitted is that the number of data messages to be transmitted per minute at a certain data rate can be increased and perhaps doubled. Thus in the case of the CCIR Radiopaging Code No. 1 not only can the throughput of data messages be enhanced within the existing baud or bit rate of the system but also the technique is transparent to other users of the system because it conforms to the Standard insofar that the function bits in the address codeword are 11 indicating a alpha-numeric format is being used in the message but that this format is overlaid with at least one alternative encoding mode, the use of which is signified by the switch character.

In a simple embodiment of the present invention in which an alpha-numeric message is transmitted as compressed widely used words or using the ISO 7-bit coded character set then the presence of a single switch character can be used to indicate a change from the currently used encoding mode to the alternative encoding mode. Since the function bits in the address codeword will indicate according to the Standard that the ISO 7-bit coded character set is to be used then if it is desired for the message to begin with compressed message words, a switch character precedes the transmission of the addresses of the assigned ROM locations.

However in order to enable the system in accordance with the present invention to be more flexible then either more single ISO 7-bit switch characters or double switch characters may be used. For example the ROM may store vocabularies in two or more languages and different switch characters may be used to indicate a change from compressed words in one language to another as well as to other encoding modes such as the ISO 7-bit coded character set and switching between upper and lower case characters.

Numeric only data may be encoded in accordance with a further encoding mode, such as 4 bit hexadecimal, and an appropriate switch character is used to indicate a change to this encoding mode.

Optionally part or all of a message may be encrypted and a discrete switch character is used to indicate that encryption is being used.

If the capacity of the ROM is sufficient, it may be used to store in assigned ROM locations, the ROM address locations of words which can be used to form phrases or commonly used word groups.

In the various embodiments of the present invention the ROM addresses may be sent as representations of the ISO 7-bit coded character sets or the hexadecimal coded character set.

The present invention also provides a receiving apparatus for use in a digital communication system in accordance with the present invention, the receiving apparatus comprising means for receiving and recovering message data, first storage means for storing said message data, second storage means responsive to the receipt of data structures indicative of a first encoding mode for reading out a corresponding at least one spoken language word as a succession of data structures indicative of a second encoding mode representing respective characters in said at least one spoken language word, display means including a driver responsive to data structures of the second encoding mode for causing the respective character to be displayed and control means for controlling the reading out of message data from said first storage means, said control means being responsive to a switch character for causing a change in the feed of the codeword(s) subsequent to the switch character so that it is either to said driver instead of the second storage means or vice versa.

The present invention will now be described, by way of example, with reference to the accompanying drawings, wherein:
Figure 1 is a block schematic diagram of a base or primary station for a digital radiopaging system,
Figure 2 is a block schematic diagram of a paging receiver or secondary station,
Figure 3 illustrates a first message in English which includes words stored in a common vocabulary together with a proper noun,
Figures 4 to 6 illustrate three alternative representations of the message shown in Figure 3 using the system in accordance with the present invention,
Figure 7 illustrates a second message in English which includes a proper noun as well as numbers,
Figure 8 illustrates a representation of the message shown in Figure 7 using the system in accordance with the present invention, and
Figure 9 illustrates how a widely used group of words may be transmitted in the system in accordance with the present invention.

In the drawings, the same reference numerals have been used to indicate corresponding features.

The present invention will be described with reference to a digital radiopaging system which can be overlaid transparently on a system operating in accordance to the CCIR Radiopaging Code No. 1 but the encoding principles disclosed can be applied to any other data message system having a primary station and secondary station which are linked by cable, optical fibre and/or radio or a data storage and retrieval system.

In the case of a digital radiopaging system, such as one operating in accordance with CCIR Radiopaging Code No. 1, messages to be relayed to secondary stations may be sent orally to a paging centre whereat an operator at a keyboard 10 types in the addresses and the messages which are encoded in accordance with the ISO-7 bit coded character set and sent to a control stage 14. Alternatively a subscriber with a personal computer and MODEM 11 is able to send messages directly to the control stage 14 by way of a landline connection. The control stage includes spell checking means and a dictionary in the form of a ROM 12 containing a vocabulary of say 16000 commonly used words. The dictionary is interrogated to see if it includes the word which has just been stored in the control stage, if it does then the address of the location of the word in the ROM is read-out. This address for the sake of description comprises two ISO 7-bit characters or three 4-bit hexadecimal characters. A message format stage 16 is coupled to the control stage 14 which feeds encoded data to the stage 16 either in the form of concatenated ROM addresses each representative of a compressed word, assuming that the words are in the dictionary, or ISO-7 bit coded characters. As will be explained later each change from a ROM address to ISO-7 bit characters and vice versa is indicated by a single 7 bit switch character or a double switch character comprising coded symbols of say 7 and 4 bits, respectively.

The message format stage 16 assembles the address codeword and the encoded words and puts them into a format suitable for transmission by a transmitter 18 on a CCIR Radiopaging Code No. 1 system. Since the format has been described briefly in the preamble of this specification then in the interests of brevity it will not be repeated.

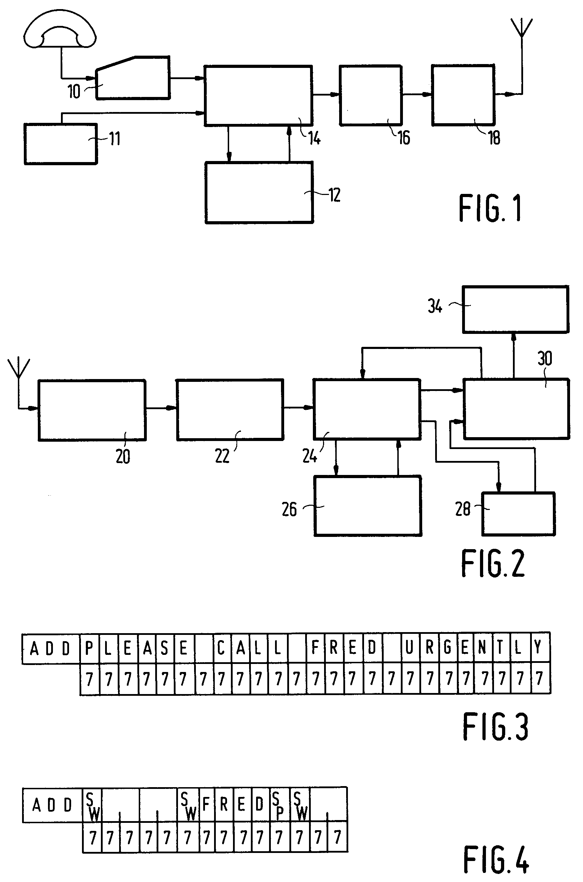

Figure 2 illustrates a secondary station or paging receiver which comprises a radio receiver 20 which is periodically energised to be able to receive an address codeword, if sent, in its appropriate frame. If the address codeword is followed by message codewords, the addressed paging receiver remains energised to receive the message codewords which are passed to a decoding stage 22 which includes means for error checking and correction within the limits permitted by the CCIR Radiopaging Code No. 1. The decoding stage 22 checks addresses transmitted in the appropriate frame for data transmitted to the particular pager. If a match is detected between the transmitted data and an internally stored address then the paging receiver remains energised so that the concatenated message data appears at the output of the stage 22, which output comprises a stream of bits which include ROM addresses and ISO 7-bit characters. The stream of bits is applied to a microcontroller 24 which stores the message data in a RAM 26.

When the user of the paging receiver wants to read-out the message(s) stored in the RAM 26, the microcontroller 24 is activated and reads out the data bits of the stored message. In the case of a ROM address, this is supplied to a ROM 28 which comprises the same dictionary as is stored in the ROM 12 (Figure 1) of the primary station. Assuming that the address corresponds to an entry in the ROM 28 then the relevant word including an end space character is read-out in the form of ISO-7 bit coded characters and is supplied to a display driver 30.

Alternatively, in the case of some of the bits being read-out of the RAM 26 being ISO-7 bit coded characters then the microcontroller 24 supplies these directly to the display driver 30.

The read-out from the ROM 28 has to be controlled such that word characters ISO 7-bit coded form are supplied in the correct sequence to the display driver 30. One way of doing this is for the space character at the end of a word to be detected by the microcontroller 24. A liquid crystal display (LCD) panel 34 is connected to the display driver 30.

In its most elementary form only two methods of encoding alpha-numeric data are used, namely as a ROM address comprising two ISO 7-bit coded characters or character by character using ISO 7-bit coded characters and the interface from one encoding method and the other is denoted by a 7-bit switch character SW which may comprise a non-printable ISO 7-bit coded character and preferably, in order to permit the paging terminal to receive inputs of a personal computer 11, a non-printable, non-control ISO 7-bit coded character for example DEL = 7FH. As mentioned in the preamble the pager address which introduces alpha-numeric data has its function bits set to 11, thus when reading out stored message data from the RAM, the first 7 message bits are checked to see if they represent a switch character and if they do the microcontroller 24 responds accordingly.

In a more comprehensive message paging system several different switch characters can be used which gives a great deal of flexibility in the operation of the paging system by being able to offer more comprehensive bit saving modes of operation. By way of example numerals may be transmitted as 4 bit hexadecimal characters, one or more dictionaries of non-English language words may be stored in the ROM and when possible the ROM locations are transmitted, the transmissions may be encrypted or commonly used groups of words or phrases may be assembled by an assigned location in a ROM storing the locations of words that can be assembled as required. Also changes between upper and lower class punctuation may be indicated by suitable switch characters. In order to change from one mode to another a switch character is required which can be used in the paging receiver to effect the required change. However since the number of available non-printable, non-control ISO 7-bit coded characters is limited then it may be necessary to use double switch characters. With a double switch character the first character, for example the delete character, is recognised in the receiver as a switch character. However the second character can be chosen from an alpha-numeric or numeric character set. In the following illustrations the second character is a 4-bit hexadecimal character where say 0001 means English, 0010 French, 0011 German, 0100 hexadecimal coded characters, 0101 means ISO 7-bit coded characters and 0111 means that the following message has been encrypted.

Figure 3 illustrates the sending of the English language message "Please call Fred urgently". When assembled the message comprises an address codeword ADD followed by the message encoded in the ISO 7-bit coded character set. Thus each letter and space requires the sending of 7 bits, as shown below each letter and space, making a total of 175 bits of message data requiring 9 codewords plus the 32 bit ADD codeword.

Figures 4 to 6 illustrate encoding this same message in accordance with the present invention.

Figure 4 illustrates a simple case where message data comprises compressed words plus end space characters, such as "please", "call" and "urgently", which are encoded as two 7-bit characters representing locations in a ROM dictionary and a proper noun "Fred" encoded using the ISO 7-bit coded character set. In this simple case a single 7-bit switch character SW is sufficient. In Figure 4 the address codeword is immediately followed by a switch character, then two pairs of 7-bit ROM location characters, a switch character indicating a change from encoded ROM locations to the ISO 7-bit coded character set used for encoding "FRED" and a space SP, another switch character and finally a pair of 7-bit ROM location characters. When encoded in this manner the total is 98 bits of message data requiring 5 message codewords plus the ADD codeword. Compared to Figure 3, a saving of 4 codewords is achieved for this message.

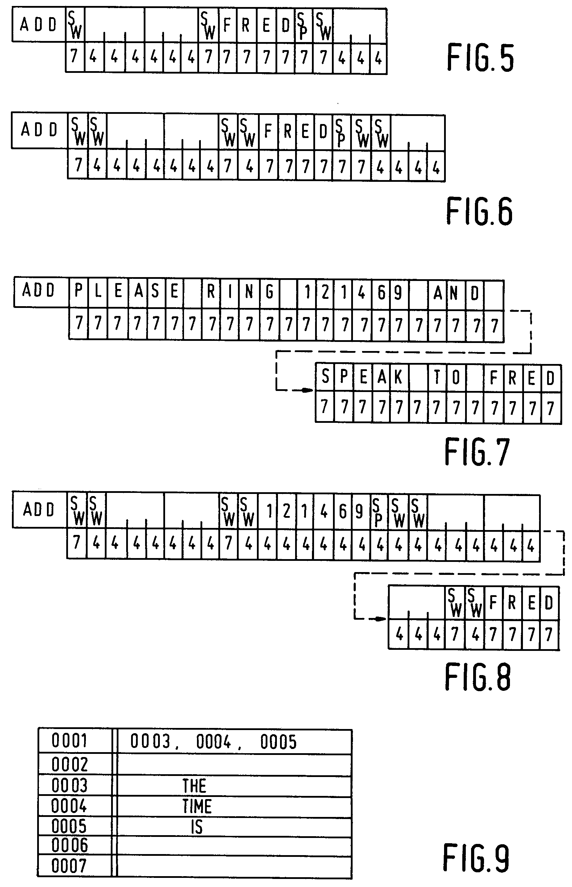

Figure 5 shows a variant of Figure 4 in which each compressed word is stored as three 4-bit characters. The total number of bits is now 92 requiring 5 message codewords plus the ADD codeword.

Figure 6 is a variant of Figure 5 in which double switch characters of 7 and 4 bits are used to provide a more comprehensive range of options of bit saving. However the effect of doing this on a simple message is to increase the total number of bits to 104 requiring 6 message codewords plus the ADD codeword. Nevertheless there is still a saving of 3 codewords compared to Figure 3 for the benefit of great flexibility.

Figure 7 illustrates the sending of the message "Please ring 121469 and speak to Fred" in the ISO 7-bit coded character set. The total number of bits is 252 requiring 13 message codewords plus the ADD codeword.

Figure 8 illustrates encoding this message in a similar manner as used in Figure 6 with the exception that the numbers and the following space are encoded using 4 bit hexadecimal characters. In this case a special 4 bit numeric switch character must be allocated to indicate termination of numeric data, for example "]" (closing bracket), which may be transmitted in ISO 7-bit coded format when needed elsewhere. The choice of the double switch characters used indicates the change to be made from the immediately preceding encoding mode. In the case of Figure 8 the total number of bits is 157 requiring 8 message codewords plus the ADD codeword. Thus compared to Figure 7 a saving of 92 bits or 5 message codewords is achieved.

Figures 4 to 6 and 8 illustrate four possible ways of implementing the system in accordance with the present invention. However these are not exclusive and other variants are possible for example it might be more economic to encode a 2 digit number in the ISO 7-bit coded character set if the preceding word is also encoded using this character set. The choice and number of encoding modes is at the discretion of the system operator. Irrespective of whether a relatively small or large ROM is used, the alpha-numeric message data can still be encoded.

Figure 9 illustrates a method by which commonly used phrases or groups of words may be encoded to save bits. In a sentence "The time is 4 p.m.", the first three words frequently will be used as a group and the words "the", "time" and "is" will be stored at respective locations in the ROM. Instead of sending three address locations totalling 36 bits, a single ROM address for the phrase "The time is" is sent, for example 0001. At memory location 0001, there is stored the memory locations, say 0003, 0004 and 0005 of the respective words "the", "time" and "is" which at the paging receiver are read-out in that order from the ROM. Thus only a 12 bit address location need be transmitted thereby saving 24 bits. Other phrases like "as soon as possible" could be handled in a similar way although it may be possible to store the abbreviation "asap" as a single item in the ROM.

Although the error correction and detection capabilities of the CCIR Radiopaging Code No. 1 will be usable in the system in accordance with the present invention, the effect of errors on the compressed words may be more serious so that for example if a ROM address cannot be decoded satisfactorily then rather than reproduce a word which may be completely nonsensical, an indication, such as a star, may be displayed to indicate to a user that a non-decodable word has been received.

The system in accordance with the present invention enables message words to be encoded in a transparent, effective and flexible manner which increases the message capacity of a CCIR Radiopaging Code No. 1 system beyond that envisaged at its introduction. The present invention can be applied to other digital radiopaging systems using paging codes such as GOLAY and ERMES.

In describing the present invention in the context of a digital paging system, no discussion has been made of sending tone only alert signals, that is address signals only, and of the facility of producing audio, optical or vibrational alert signals at the receiver as they do not form a part of the inventive step disclosed herein.

From reading the present disclosure, other modifications will be apparent to persons skilled in the art. Such modifications may involve other features which are already known in the design, manufacture and use of alpha-numeric message communication systems and component parts thereof and which may be used instead of or in addition to features already described herein. Although claims have been formulated in this application to particular combinations of features, it should be understood that the scope of the disclosure of the present application also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

## Claims

1. A digital communications system comprising a transmitting means and a receiving means, in which the transmitting means has means for transmitting alpha-numeric encoded modes and in which the change from one encoded mode to another encoded mode is denoted by the presence of a switch character.

2. A system as claimed in claim 1, characterised in that one encoded mode comprises a first type data structure indicative of at least one spoken language word and in that another encoded mode comprises a second type data structure indicative of an individual alpha character.

3. A system as claimed in claim 2, characterised in that the first type data structure comprises a data structure indicative of at least one spoken language word and a space character.

4. A system as claimed in claim 2 or 3, characterised in that the receiving means comprises a non-volatile memory storing data at predetermined storage locations and in that the first type data structure comprises an identity of a storage location in the memory, and in that when said storage location is interrogated the corresponding at least one spoken language word is read out character by character in the form of the second type data structure.

5. A system as claimed in claim 2, 3 or 4, characterised in that a number of elements of said first type data structure are concatenated.

6. A system as claimed in any one of claims 2 to 5, characterised in that an element the first type data structure comprises a smaller number of binary bits compared to the number of bits required to represent the same spoken language word in the second type data structure.

7. A system as claimed in claim 6, characterised in that a switch character has the same number of bits as a second type data structure.

8. A system as claimed in any one of claims 2 to 6, characterised in that the switch character comprises a double character of which a first character is indicative that there is a change in encoding mode and a second character is indicative of the next following encoding mode.

9. A system as claimed in any one of claims 2 to 8, characterised in that numeric characters are represented by a further encoding mode consisting of a third type of data structure.

10. A receiving apparatus for use in a communications system as claimed in claim 1, comprising means for receiving and recovering message data, first storage means for storing said message data, second storage means responsive to the receipt of data structures indicative of a first encoding mode for reading out a corresponding at least one spoken language word as a succession of data structures indicative of a second encoding mode representing respective characters in said at least one spoken language word, display means including a driver responsive to data structures of the second encoding mode for causing the respective character to be displayed and control means for controlling the reading out of message data from said first storage means, said control means being responsive to a switch character for causing a change in the feed of the codeword(s) subsequent to the switch character so that it is either to said driver instead of the second storage means or vice versa.
